# EUROPÄISCHE PATENTSCHRIFT

(11) **EP 4 244 652 B1**
(45) Veröffentlichungstag und Bekanntmachung des Hinweises auf die Patenterteilung: **04.12.2024**
(21) Anmeldenummer: 21809964.6
(22) Anmeldetag: 08.11.2021
(51) Int. Cl.: G01S 7/497, G01S 17/10, G01S 17/42

(54) **ÜBERPRÜFUNG DER FUNKTIONSFÄHIGKEIT EINES LASERSCANNERS**
VERIFICATION OF THE OPERABILITY OF A LASER SCANNER
VÉRIFICATION DU BON FONCTIONNEMENT D'UN SCANNER LASER

(30) Priorität: 11.11.2020 DE 102020129662
(43) Veröffentlichungstag der Anmeldung: 20.09.2023
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE)
(74) Vertreter: Pothmann, Karsten
(86) Internationale Anmeldenummer: PCT/EP2021/080908
(87) Internationale Veröffentlichungsnummer: WO 2022/101128

(56) Entgegenhaltungen:
- DE-A1- 102013 205 312
- DE-A1- 102018 110 566

## Beschreibung

Die vorliegende Erfindung betrifft ein Verfahren zur Funktionsüberprüfung eines Laserscanners, der ein Gehäuse mit einem lichtdurchlässigen Fenster, eine innerhalb des Gehäuses angeordnete Sendeeinheit zum Aussenden von Lasersignalen, eine bewegliche Umlenkeinheit zur Umlenkung der Lasersignale sowie eine innerhalb des Gehäuses angeordnete Detektoreinheit, wobei mittels der Sendeeinheit während einer Prüfphase wenigstens ein Prüfsignal gesendet wird die Umlenkeinheit während der Prüfphase bezüglich der Sendeeinheit derart ausgerichtet wird, dass das wenigstens eine Prüfsignal nicht auf das Fenster gelenkt wird. Die Erfindung betrifft außerdem eine entsprechende Laserscannervorrichtung mit einer Recheneinheit und einem Laserscanner, ein Kraftfahrzeug mit einer Laserscannervorrichtung und ein Computerprogrammprodukt.

Lidarsysteme können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen und so weiter.

Eine bekannte Bauform von Lidarsystemen sind sogenannte Laserscanner, bei denen ein Laserstrahl mittels einer Umlenkeinheit abgelenkt wird, so dass verschiedene Auslenkwinkel des Laserscanners realisiert werden können. In der Umgebung können die ausgesendeten Laserstrahlen teilweise reflektiert oder gestreut werden, und gestreute oder reflektiert Anteile können zum Teil wiederum auf den Laserscanner treffen, insbesondere auf eine Detektoreinheit des Laserscanners, die basierend auf den erfassten Anteilen entsprechende Detektorsignale erzeugen kann. Die Sendeeinheit eines Laserscanners enthält eine oder mehrere Laserlichtquellen und die Detektoreinheit enthält einen oder mehrere optische Detektoren, beispielsweise Fotodioden.

Die maximale Reichweite des Laserscanners ist, grundsätzlich und insbesondere im Automobilkontext, von hoher Bedeutung. Die Funktionsfähigkeit und insbesondere die maximale Reichweite eines Laserscanners kann beispielsweise durch die Verunreinigung der Lichtquellen oder der optischen Detektoren verursacht werden. Die Verunreinigung kann beispielsweise auf Staubpartikel zurückgehen, die während des Herstellungsprozesses auftreten. Solche Staubpartikel können die Lichtquelle oder den optischen Detektor teilweise verdecken und so die Reichweite des Laserscanners reduzieren. Prinzipiell können Verunreinigungen beispielsweise durch Tests am Ende des Herstellungsprozesses identifiziert werden. Es ist jedoch möglich, dass die Verunreinigungen erst nach dem Test entstehen oder dass bereits vor dem Test vorhandene Verunreinigungen erst nach dem Test die Lichtquelle beziehungsweise den optischen Detektor verdecken.

Im Dokument DE 10 2018 110 566 A1 wird ein Verfahren zur Überprüfung der Funktionsfähigkeit eines Laserscanners beschrieben. Dabei wird mittels eines Senders des Laserscanners ein Lichtsignal gesendet, während eine dreh- oder schwenkbare Umlenkspiegeleinheit so ausgerichtet ist, dass von dem Sender kommende Lichtsignale nicht auf ein Fenster als Gehäuse des Laserscanners gelenkt werden können. Das im Inneren des Gehäuses gestreute Lichtsignal wird mit dem Empfänger empfangen und mit einer Referenzintensitätsverteilung verglichen. Abhängig von einem Ergebnis des Vergleichs wird gegebenenfalls ein Hinweis zur Funktionsfähigkeit des Laserscanners generiert.

Das Dokument DE 10 2013 205312 A1 beschreibt ein Verfahren zur Funktionsprüfung eines Ultraschallsensors mit den Schritten Erfassen von ersten Messsignalen in einem ersten Zeitfenster, Bestimmen eines Schwellenwerts in Abhängigkeit der erfassten ersten Messsignale, Erfassen von zweiten Messsignalen in einem zweiten Zeitfenster, Erzeugen einer Kennzahl in Abhängigkeit der erfassten zweiten Messsignale und des Schwellenwertes. In Abhängigkeit der Kennzahl wird ein Signal erzeugt, das die Funktionsfähigkeit des Ultraschallsensors repräsentiert.

Ein Nachteil dieses Verfahrens ist, dass die Referenzintensitätsverteilung im Allgemeinen temperaturabhängig ist, sodass für verschiedene Temperaturen verschiedene Referenzintensitätsverteilungen vorgehalten werden müssen.

Vor diesem Hintergrund ist es eine Aufgabe der vorliegenden Erfindung, ein verbessertes Konzept zur Funktionsüberprüfung eines Laserscanners anzugeben, das robuster gegenüber Temperaturschwankungen ist.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, bei einem Laserscanner, dessen Detektoreinheit wenigstens zwei optische Detektoren enthält, für jedes entsprechende Detektorsignal eine Pulsweite zu bestimmen und die Summe der Pulsweiten zu bestimmen, um die Funktionsfähigkeit zu überprüfen.

Gemäß dem verbesserten Konzept wird ein Verfahren zur Funktionsüberprüfung eines Laserscanners angegeben. Der Laserscanner weist ein Gehäuse mit einem lichtdurchlässigen Fenster auf sowie einen innerhalb des Gehäuses angeordneten Sensor zum Aussenden von Lasersignalen. Der Laserscanner weist außerdem eine bewegliche Umlenkeinheit zur Umlenkung der Lasersignale auf sowie eine innerhalb des Gehäuses angeordnete Detektoreinheit mit wenigstens zwei optischen Detektoren. Gemäß dem Verfahren wird mittels der Sendeeinheit während einer Prüfphase wenigstens ein Prüfsignal gesendet. Die Umlenkeinheit wird während der Prüfphase bezüglich der Sendeeinheit, insbesondere mittels einer Steuerungseinheit des Laserscanners, derart ausgerichtet, dass das wenigstens eine Prüfsignal, insbesondere durch die Umlenkeinheit, nicht auf das Fenster gelenkt wird. Anteile des wenigstens einen Prüfsignals, insbesondere reflektierte und/oder gestreute Anteile, werden mittels der wenigstens zwei optischen Detektoren erfasst und basierend auf den erfassten Anteilen werden mittels der wenigstens zwei optischen Detektoren wenigstens zwei Detektorsignale erzeugt. Mittels einer Recheneinheit, insbesondere mittels einer Recheneinheit des Laserscanners oder mittels einer mit dem Laserscanner gekoppelten Recheneinheit, wird für jedes der wenigstens zwei Detektorsignale eine Pulsweite bestimmt und eine Summe der bestimmten Pulsweiten, insbesondere aller bestimmten Pulsweiten, berechnet. Eine Funktionsfähigkeit der Sendeeinheit und/oder der Detektoreinheit wir, insbesondere mittels der Recheneinheit, basierend auf der Summe überprüft.

Hier und im Folgenden kann der Begriff "Licht" derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht. Bevorzugt entsprechen die Lasersignale sowie das Prüfsignal Licht im infraroten Bereich.

Das lichtdurchlässige Fenster des Gehäuses ist insbesondere lichtdurchlässig für Licht, das mittels der Sendeeinheit ausgesendet werden kann, insbesondere in Form der Lasersignale beziehungsweise des Prüfsignals. Außer dem Fenster kann das Gehäuse beispielsweise lichtundurchlässig sein.

Die Lasersignale sowie das wenigstens eine Prüfsignal entsprechen jeweils Lasersignalen, die mittels einer oder mehrerer Lichtquellen der Sendeeinheit, insbesondere Laserlichtquellen, beispielsweise Laserdioden, ausgesendet werden können. Insbesondere kann das wenigstens eine Prüfsignal als Spezialfall der Lasersignale angesehen werden, nämlich als solches Lasersignal, das während der Prüfphase ausgesendet wird. Nichtsdestotrotz können die Prüfsignale auch mit einer spezifisch angepassten spektralen oder sonstigen Zusammensetzung oder Struktur erzeugt und ausgesendet werden, die sich von anderen Lasersignalen, die außerhalb der Prüfphase erzeugt und ausgesendet werden, unterscheiden kann. Dies ist jedoch nicht zwingend notwendig.

Die Detektoreinheit, insbesondere die wenigstens zwei optischen Detektoren, ist beziehungsweise sind dazu eingerichtet, reflektierte oder gestreute Anteile der Lasersignale sowie des wenigstens einen Prüfsignals zu detektieren. Werden die Lasersignale durch das lichtdurchlässige Fenster in die Umgebung des Gehäuses emittiert, so können beispielsweise außerhalb des Laserscanners beziehungsweise des Gehäuses reflektierte oder gestreute Anteile des Lasersignals wieder in das Gehäuse einfallen und daraufhin detektiert werden. Im Falle des wenigstens einen Prüfsignals werden insbesondere innerhalb des Gehäuses gegebenenfalls mehrfach reflektierte und/oder gestreute Anteile des wenigstens einen Prüfsignals von den wenigstens zwei optischen Detektoren detektiert. Insbesondere verlässt das wenigstens eine Prüfsignal, indem es nicht auf das Fenster gelenkt wird, das Gehäuse des Laserscanners im Wesentlichen nicht.

Dass das wenigstens eine Prüfsignal nicht auf das Fenster gelenkt wird, kann insbesondere basierend auf einem strahlenoptischen Verständnis beziehungsweise einem Verständnis gemäß der geometrischen Optik aufgefasst werden.

Jeder optische Detektor der wenigstens zwei optischen Detektoren erzeugt insbesondere ein zugehöriges Detektorsignal der wenigstens zwei Detektorsignale basierend auf den von dem jeweiligen optischen Detektor erfassten Anteilen. Je nach konkreter Ausgestaltungsform des Laserscanners können die wenigstens zwei optischen Detektoren unterschiedlich ausgestaltet sein. Vorzugsweise enthalten die wenigstens zwei optischen Detektoren jeweils eine Fotodiode, beispielsweise eine Avalanche-Fotodiode, APD. Der zeitliche Verlauf eines der Detektorsignale spiegelt daher den zeitlichen Verlauf der Anzahl von Photonen wider, die auf eine entsprechende optisch aktive Fläche des jeweiligen optischen Detektors treffen.

Die Detektorsignale weisen insbesondere Signalpulse auf, die auch als Echos bezeichnet werden können. Die Pulsweite eines Detektorsignals entspricht daher insbesondere einer Pulsweite eines entsprechenden Signalpulses. Die Pulsweite ist dabei gegeben durch einen Zeitdauer, während der die Amplitude des entsprechenden Detektorsignals einen Wert oberhalb eines vordefinierten Grenzwerts annimmt. Diese Pulsweite wird auch als Echopulsweite, EPW, bezeichnet.

Das Überprüfen der Funktionsfähigkeit der Sendeeinheit und/oder der Detektoreinheit kann insbesondere derart verstanden werden, dass anhand der Summe der Pulsweiten überprüft wird, ob gegenüber einem Normalbetrieb oder einem uneingeschränkten Betrieb beziehungsweise einer uneingeschränkten Funktion der Sendeeinheit und/oder der Detektoreinheit eine Einschränkung vorliegt.

Insbesondere hat die Anzahl von Photonen, die auf die aktive Oberfläche eines optischen Detektors trifft, Auswirkungen auf die Pulsform des entsprechenden Signalpulses und damit Auswirkungen auf die Pulsweite. Ist die Pulsweite daher unter reproduzierbaren Bedingungen, wie sie während der Prüfphase gegeben sind, anders als dies für einen regulären oder uneingeschränkten Betrieb zu erwarten ist, so kann auf eine eingeschränkte Funktionsfähigkeit der Sendeeinheit und/oder der Detektoreinheit geschlossen werden. Dies kann insbesondere durch die teilweise oder vollständige Verdeckung einer Lichtquelle der Sendeeinheit oder eines der optischen Detektoren, also insbesondere einer aktiven Oberfläche eines der optischen Detektoren, verursacht werden.

Das verbesserte Konzept nutzt die Erkenntnis aus, dass die Summe der Pulsweiten, insbesondere für eine vordefinierte Detektorempfindlichkeit der gesamten Detektoreinheit, wenigstens näherungsweise gegenüber Temperaturschwankungen invariant ist, selbst wenn die einzelnen optischen Detektoren voneinander abweichende Temperaturcharakteristiken aufweisen, wenn also beispielsweise der Zusammenhang zwischen Temperatur und Spannung, insbesondere Sperrspannung, mit der der optische Detektor betrieben werden muss, um eine bestimmte Empfindlichkeit zu erreichen, nicht für alle optischen Detektoren genau gleich ist. Solche unterschiedlichen Temperaturcharakteristiken können beispielsweise auf leicht unterschiedliche Größen der jeweiligen aktiven Flächen der optischen Detektoren zurückgehen. Die einzelnen Pulsweiten können sich bei Temperaturveränderungen dann durchaus verändern, die Summe aller Pulsweiten bleibt jedoch wenigstens näherungsweise konstant, da eine möglicherweise kleinere Pulsweite eines der Detektoren durch entsprechend größere Pulsweiten der übrigen Detektoren kompensiert wird. Es hat sich gezeigt, dass dies selbst dann noch der Fall ist, wenn einer der wenigstens zwei optischen Detektoren in seiner Temperaturcharakteristik deutlich von den übrigen optischen Detektoren abweicht.

Weicht die berechnete Summe der Pulsweiten nun von einem erwarteten Wert, der beispielsweise im Rahmen einer Kalibrierung bestimmt werden kann, ab, so deutet dies auf eine eingeschränkte Funktion eines der optischen Detektoren oder einer Lichtquelle der Sendeeinheit hin, beispielsweise aufgrund von Kontamination. Zudem kann die Größe der Abweichung des Werts der Summe von dem zu erwartenden Wert bei uneingeschränkter Funktion eine Aussage darüber zulassen, wie stark die Funktionseinschränkung beziehungsweise die Kontamination ist. Je stärker die Verdeckung desto weniger Photonen werden von dem entsprechenden optischen Detektor detektiert und desto geringer wird die Pulsweite, was in der Konsequenz eine entsprechend stärkere Abweichung der Summe zur Folge hat.

Durch die Verwendung der Prüfsignale in der beschriebenen Weise wird außerdem ein möglicher Einfluss von Umgebungslicht verringert oder nahezu ausgeschlossen.

Gemäß zumindest einer Ausführungsform des Verfahrens nach dem verbesserten Konzept wird die Summe mittels der Recheneinheit mit einem vorgegebenen Referenzwert verglichen wird und die Funktionsfähigkeit der Sendeeinheit und/oder der Detektoreinheit wird basierend auf einem Ergebnis des Vergleichs überprüft.

Bei dem Referenzwert kann es sich dabei insbesondere um die Summe der Pulsweiten zu einem früheren Zeitpunkt, beispielsweise während der Kalibrierung, handeln. Abweichungen der Summe von dem Referenzwert, die insbesondere einen vordefinierten Toleranzwert überschreiten, deuten auf die eingeschränkte Funktionalität der wenigstens zwei optischen Detektoren beziehungsweise einer Lichtquelle hin.

In verschiedenen Ausführungsformen der das Referenzwert auch aktualisiert oder periodisch aktualisiert werden, beispielsweise beim Aktivieren oder Deaktivieren des Laserscanners. Falls insbesondere keine signifikante Beeinträchtigung der Funktionsfähigkeit der Sendeeinheit und/oder der Detektoreinheit festgestellt wird, kann die berechnete Summe der Pulsweiten als neuer Referenzwert festgelegt und gespeichert werden. Dadurch können Effekte durch die reguläre Alterung der Komponenten, insbesondere der optischen Detektoren, kompensiert werden.

Gemäß zumindest einer Ausführungsform beinhalten die wenigstens zwei optischen Detektoren jeweils eine Fotodiode, beispielsweise eine Avalanche-Fotodiode, APD, beinhalten, die, insbesondere mittels einer Steuereinheit des Laserscanners, in Sperrrichtung betrieben werden. Eine Sperrspannung zum Betrieb der Fotodioden wird während der Prüfphase geregelt, insbesondere mittels der Steuereinheit, um eine vordefinierte Detektorempfindlichkeit der Detektoreinheit einzustellen und insbesondere konstant zu halten.

Bei der Detektorempfindlichkeit handelt es sich insbesondere um eine gemeinsame Empfindlichkeit aller optischen Detektoren der wenigstens zwei optischen Detektoren. Diese kann beispielsweise durch einen gesamten Dunkelstrom der wenigstens zwei optischen Detektoren und/oder, insbesondere im Falle von APDs, einen gesamten Multiplikationsfaktor der wenigstens zwei optischen Detektoren bestimmbar sein. Der Multiplikationsfaktor gibt dabei insbesondere an, wie viele Ladungsträger mittels der wenigstens zwei optischen Detektoren pro detektiertem Photon erzeugt werden, beispielsweise im Mittel.

Die wenigstens zwei optischen Detektoren werden dabei insbesondere alle mit derselben Sperrspannung betrieben.

Gemäß zumindest einer Ausführungsform wird, insbesondere mittels der Steuereinheit, ein Sollwert für die Regelung der Sperrspannung basierend auf vorgegebenen Kalibrierungsdaten abhängig von der Detektorempfindlichkeit bestimmt.

Die Kalibrierungsdaten können beispielsweise einen Zusammenhang zwischen einer Temperatur, beispielsweise einer Umgebungstemperatur der wenigstens zwei optischen Detektoren oder einer Wärmesenkentemperatur der wenigstens zwei optischen Detektoren oder dergleichen, und der Sperrspannung, die zum Erzielen der Detektorempfindlichkeit erforderlich ist, beschreiben. Dieser Zusammenhang kann insbesondere wenigstens näherungsweise linear sein. Der Zusammenhang kann, beispielsweise in Form einer Umsetzungstabelle oder Look-Up Tabelle, in einem Speicherelement der Recheneinheit oder der Steuereinheit gespeichert sein.

Zur Kalibrierung kann beispielsweise die Detektorempfindlichkeit beziehungsweise ein entsprechender Dunkelstrom oder ein entsprechender Multiplikationsfaktor vorgegeben werden. Für zwei oder mehr Temperaturen kann dann die entsprechende Sperrspannung bestimmt werden, die erforderlich ist, um die Detektorempfindlichkeit beziehungsweise den Dunkelstrom oder den Multiplikationsfaktor zu erzielen. Sperrspannungen für weitere Temperaturen können dann durch lineare Interpolation und/oder Extrapolation bestimmt werden.

Gemäß dem verbesserten Konzept wird auch eine Laserscannervorrichtung mit einer Recheneinheit und einem Laserscanner angegeben. Der Laserscanner weist ein Gehäuse mit einem lichtdurchlässigen Fenster auf sowie eine innerhalb des Gehäuses angeordnete Sendeeinheit zum Aussenden von Lasersignalen. Der Laserscanner weist eine Steuereinheit auf sowie eine bewegliche Umlenkeinheit zur Umlenkung der Lasersignale und eine innerhalb des Gehäuses angeordnete Detektoreinheit mit zwei oder mehr optischen Detektoren. Die Steuereinheit ist dazu eingerichtet, die Sendeeinheit anzusteuern, um während einer Prüfphase wenigstens ein Prüfsignal zu senden. Die Steuereinheit ist außerdem dazu eingerichtet, die Umlenkeinheit anzusteuern, so dass die Umlenkeinheit während der Prüfphase bezüglich der Sendeeinheit derart ausgerichtet ist, dass das wenigstens eine Prüfsignal nicht auf das Fenster gelenkt wird. Die wenigstens zwei optischen Detektoren sind dazu eingerichtet, reflektierte und/oder gestreute Anteile des wenigstens einen Prüfsignals zu erfassen und basierend auf den erfassten Anteilen wenigstens zwei Detektorsignale zu erzeugen. Die Recheneinheit ist dazu eingerichtet, für jedes der wenigstens zwei Detektorsignale eine Pulsweite zu bestimmen und eine Summe der Pulsweiten zu berechnen. Die Recheneinheit ist dazu eingerichtet, eine Funktionsfähigkeit der Sendeeinheit und/oder der Detektoreinheit basierend auf der Summe zu überprüfen.

Die Recheneinheit kann dabei Teil des Laserscanners sein oder separat zu diesem vorgesehen sein. Ist die Laserscannervorrichtung für den Einsatz in einem oder an einem Kraftfahrzeug vorgesehen, so kann die Recheneinheit beispielsweise als elektronisches Steuergerät des Kraftfahrzeugs implementiert sein. Die Steuereinheit kann gegebenenfalls auch Teil der Recheneinheit sein. Insbesondere können beschriebene Funktionen oder Aufgaben der Recheneinheit in verschiedenen Ausführungsformen von der Steuereinheit übernommen werden oder umgekehrt.

Gemäß zumindest einer Ausführungsform der Laserscannervorrichtung beinhaltet die Umlenkeinheit einen drehbaren oder schwenkbaren Spiegel oder ein mikroelektromechanisches Spiegelsystem, also einen Spiegel, der als mikroelektromechanisches System, MEMS, ausgestaltet ist.

Insbesondere kann die Steuereinheit die Umlenkeinheit während der Prüfphase derart ansteuern, dass von der Sendeeinheit entsprechend ausgesendete Prüfsignale nicht auf eine spiegelnde Oberfläche der Umlenkeinheit, insbesondere des Spiegels, treffen oder von der spiegelnden Oberfläche in einen Bereich innerhalb des Gehäuses umgelenkt werden, der nicht dem Fenster entspricht.

In verschiedenen Ausführungsformen beinhaltet der schwenk- oder drehbare Spiegel einen Spiegelkörper, der insbesondere im Wesentlichen quaderförmig ausgestaltet sein kann, wobei sich auf einer Seitenfläche des Quaders eine spiegelnde Oberfläche befindet. In verschiedenen Ausgestaltungsformen kann auf einer der spiegelnden Oberfläche gegenüberliegenden Seite des Quaders eine weitere spiegelnde Oberfläche angeordnet sein. Der Spiegelkörper ist um eine Rotationsachse drehbar oder schwenkbar gelagert, die insbesondere durch zwei weitere gegenüberliegende Seitenflächen des Quaders tritt. Die verbleibenden beiden Seitenflächen des Quaders, die also weder einer spiegelnden Oberfläche noch einer Seitenfläche, durch welche die Rotationsachse tritt, entsprechen, können beispielsweise als Stirnseiten bezeichnet werden.

In verschiedenen Ausführungsformen ist die Steuereinheit dazu eingerichtet, die Umlenkeinheit während der Prüfphase derart anzusteuern, dass die ausgesendeten Prüfsignale auf eine der Stirnseiten treffen.

Gemäß zumindest einer Ausführungsform beinhalten die wenigstens zwei optischen Detektoren jeweils eine Fotodiode, insbesondere eine APD. Die Steuereinheit ist dazu eingerichtet, die Fotodioden in Sperrrichtung zu betreiben und eine Sperrspannung zum Betrieb der Fotodioden während der Prüfphase zu regeln, um eine vordefinierte Detektorempfindlichkeit der Detektoreinheit einzustellen.

Gemäß zumindest einer Ausführungsform ist die Steuereinheit dazu eingerichtet, während der Prüfphase alle Fotodioden der wenigstens zwei optischen Detektoren jeweils mit derselben geregelten Sperrspannung zu betreiben.

Gemäß zumindest einer Ausführungsform ist die Steuereinheit dazu eingerichtet ist, einen ein Sollwert für die Regelung der Sperrspannung basierend auf vorgegebenen Kalibrierungsdaten abhängig von der Detektorempfindlichkeit zu bestimmen.

Weitere Ausführungsformen der Laserscannervorrichtung folgen direkt aus den verschiedenen Ausgestaltungsformen des Verfahrens nach dem verbesserten Konzept und umgekehrt. Insbesondere kann eine Laserscannervorrichtung nach dem verbesserten Konzept dazu eingerichtet oder programmiert sein, ein Verfahren nach dem verbesserten Konzept durchzuführen oder die Laserscannervorrichtung führt ein solches Verfahren durch.

Gemäß dem verbesserten Konzept wird auch ein Kraftfahrzeug angegeben, das eine Ausführungsform einer Laserscannervorrichtung nach dem verbesserten Konzept beinhaltet.

Gemäß dem verbesserten Konzept wird auch ein Computerprogramm mit Befehlen angegeben. Wenn die Befehle beziehungsweise das Computerprogramm durch eine Laserscannervorrichtung nach dem verbesserten Konzept ausgeführt werden, veranlassen die Befehle die Laserscannervorrichtung dazu, ein Verfahren nach dem verbesserten Konzept auszuführen.

Gemäß dem verbesserten Konzept wird auch computerlesbares Speichermedium angegeben, welches ein Computerprogramm nach dem verbesserten Konzept speichert.

Computerprogramme sowie computerlesbare Speichermedien nach dem verbesserten Konzept können als jeweilige Computerprogrammprodukte mit den Befehlen bezeichnet werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen können nicht nur in der jeweils angegebenen Kombination, sondern auch in anderen Kombinationen von dem verbesserten Konzept umfasst sein. Es sind somit auch solche Ausführungen des verbesserten Konzepts umfasst und offenbart, die in den Figuren nicht explizit gezeigt und/oder erläutert sind, jedoch durch separierte Merkmalskombinationen aus den erläuterten Ausführungen hervorgehen und erzeugbar sind.

In den Figuren zeigen:
- Fig. 1: eine schematische Darstellung eines Kraftfahrzeugs mit einer beispielhaften Ausführungsform einer Laserscannervorrichtung nach dem verbesserten Konzept;
- Fig. 2: eine schematische Darstellung einer weiteren beispielhaften Ausführungsform einer Laserscannervorrichtung nach dem verbesserten Konzept;
- Fig. 3: schematische Darstellungen einer Sendeeinheit einer weiteren beispielhaften Ausführungsform einer Laserscannervorrichtung nach dem verbesserten Konzept;
- Fig. 4: schematisch einen Teil einer weiteren beispielhaften Ausführungsform einer Laserscannervorrichtung nach dem verbesserten Konzept in einer Scanphase; und
- Fig. 5: eine schematische Darstellung einer weiteren beispielhaften Ausführungsform einer Laserscannervorrichtung nach dem verbesserten Konzept in einer Prüfphase.

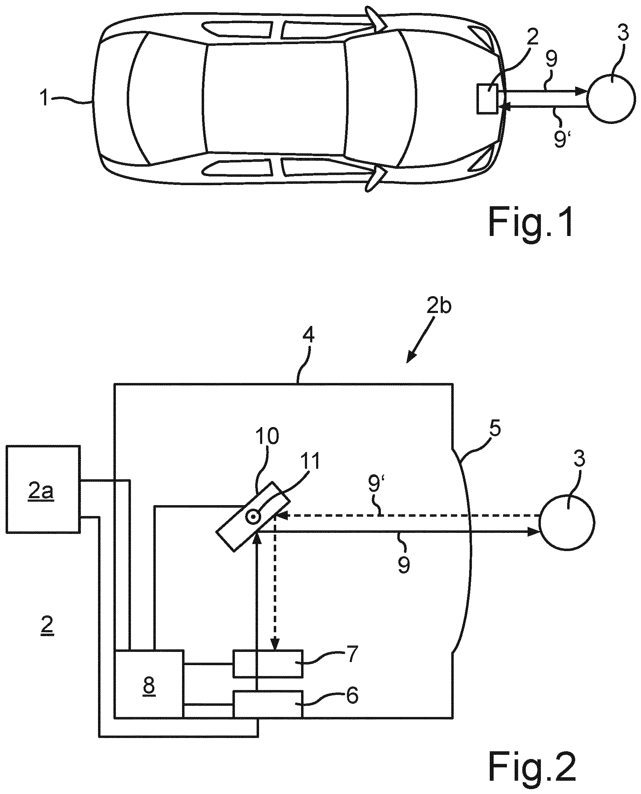

In Fig. 1 ist schematisch eine beispielhafte Ausführungsform eines Kraftfahrzeugs 1 nach dem verbesserten Konzept dargestellt. Das Kraftfahrzeug 1 beinhaltet eine Laserscannervorrichtung 2 entsprechend einer beispielhaften Ausführungsform nach dem verbesserten Konzept. Die Laserscannervorrichtung 2 kann Lasersignale 9 in eine Umgebung des Kraftfahrzeugs 1 aussenden und von einem Objekt 3 in der Umgebung reflektierte Anteile 9' der Lasersignale detektieren. Basierend auf den detektierten reflektierten Anteilen 9' kann die Laserscannervorrichtung 2 eine Position und/oder Entfernung des Objekts 3 von der Laserscannervorrichtung 2 bestimmen. Dies kann beispielsweise basierend auf dem Konzept der Lichtlaufzeitmessung, ToF (englisch: "Time of Flight"), durchgeführt werden.

Fig. 2 zeigt schematisch ein Blockdiagramm einer beispielhaften Ausführungsform einer Laserscannervorrichtung 2, beispielsweise der Laserscannervorrichtung 2 des Kraftfahrzeugs 1 aus Fig. 1. Die Laserscannervorrichtung 2 weist einen Laserscanner 2b auf sowie eine mit dem Laserscanner 2b verbundene Recheneinheit 2a, die beispielsweise als elektronisches Steuergerät des Kraftfahrzeugs 1 ausgebildet sein kann. Der Laserscanner 2b weist ein Gehäuse 4 mit einem lichtdurchlässigen Fenster 5 auf und eine innerhalb des Gehäuses 4 angeordnete Sendeeinheit 6 zum Aussenden der Lasersignale 9 durch das lichtdurchlässige Fenster 5. Der Laserscanner 2b enthält eine Steuereinheit 8, die mit der Recheneinheit 2a verbunden ist sowie mit der Sendeeinheit 6, um diese zum Aussenden der Lasersignale 9 anzusteuern. Der Laserscanner 2b enthält auch eine Detektoreinheit 7 mit wenigstens zwei optischen Detektoren, die insbesondere als Fotodioden, beispielsweise als APDs, ausgestaltet sind. Die Sendeeinheit 6 beinhaltet wenigstens eine Lichtquelle, insbesondere Laserquelle, beispielsweise wenigstens eine Infrarotlaserdiode.

Die Detektoreinheit 7 kann die reflektierten Anteile 9' der Lasersignale 9 detektieren, und basierend darauf kann jeder der wenigstens zwei optischen Detektoren ein entsprechendes Detektorsignal erzeugen und an die Steuereinheit 8 und/oder die Recheneinheit 2a übermitteln.

Der Laserscanner 2b beinhaltet außerdem eine Umlenkeinheit, die beispielsweise einen um eine Rotationsachse 11 drehbar gelagerten Spiegel 10 aufweisen kann. Die Rotationsachse 11 steht in Fig. 2 senkrecht zur Zeichenebene. Die Umlenkeinheit ist ebenfalls mit der Steuereinheit 8 verbunden und die Steuereinheit 8 kann dementsprechend die Umlenkeinheit ansteuern, so dass der Spiegel 10 um die Rotationsachse 11 gedreht wird. Durch die Rotation des Spiegels 10 kann so der Aussendewinkel der Lasersignale 9 variiert werden. Ein Empfangspfad für die reflektierten Anteile 9' der Lasersignale 9, die beispielsweise von dem Objekt 3 reflektiert wurden, führt über den Spiegel 10 zu der Detektoreinheit 7, insbesondere zu einer aktiven Oberfläche eines der optischen Detektoren. Die reflektierten Anteile 9' werden dann von dem entsprechenden optischen Detektor erfasst, so dass durch Rotation des Spiegels 10 um die Rotationsachse 11 jeder der optischen Detektoren aus unterschiedlichen Richtungen einfallende reflektierte Anteile 9' der Lasersignale 9 detektieren kann. Die Momentanposition des Spiegels 10 kann dabei beispielsweise über einen mit der Rotationsachse 11 beziehungsweise einer entsprechenden Welle gekoppelten Drehgeber (nicht dargestellt) bestimmt werden.

Indem die Momentanposition des Spiegels 10 beispielsweise zu jedem Zeitpunkt bekannt ist, kann über die zeitliche Abfolge der detektierten reflektierten Anteile 9' eine Menge von Abtastpunkten, die auch als Punktwolke bezeichnet wird, erzeugt werden. Dabei wird mittels jedes optischen Detektors eine Untermenge der Abtastpunkte beziehungsweise der Punktwolke erzeugt. Eine Untermenge von Abtastpunkten, die mittels eines der optischen Detektoren erzeugt wird, kann auch als Lage von Abtastpunkten bezeichnet werden.

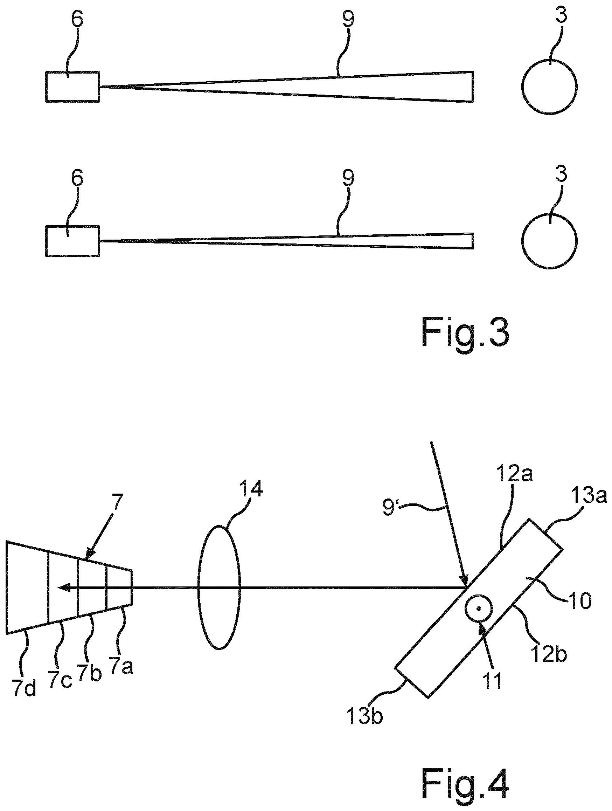

In Fig. 3 sind schematisch die Sendeeinheit 6 des Laserscanners 2b aus Fig. 2 sowie die Lasersignale 9 und das Objekt 3 gezeigt. Die obere Abbildung in Fig. 3 entspricht beispielsweise einer Seitenansicht, also einer Ansicht mit Blickrichtung senkrecht zu der Rotationsachse des Spiegels 10. Die untere Abbildung in Fig. 3 entspricht beispielsweise einer Draufsicht auf die Sendeeinheit 6, also einer Ansicht mit Blickrichtung parallel zu der Rotationsachse des Spiegels 10. Wie aus den Abbildungen der Fig. 3 erkennbar ist, kann eine jeweilige Strahlaufweitung der Lasersignale 9 in unterschiedlichen Ebenen unterschiedlich ausfallen.

In Fig. 4 sind die Detektoreinheit 7 und der Spiegel 10 des Laserscanners 2b der Fig. 2 schematisch nochmals dargestellt, wobei der Empfangspfad der reflektierten Anteile 9' angedeutet ist. Optional kann der Laserscanner 2b eine Linsenanordnung 14 zur Strahlführung aufweisen, die im Empfangspfad für die reflektierten Anteile 9' angeordnet ist.

Im Beispiel der Fig. 4 sind vier optische Detektoren 7a, 7b, 7c, 7d der Detektoreinheit 7 dargestellt, die beispielsweise linear nebeneinander angeordnet sind. Beispielsweise kann die Sendeeinheit 6 zwei oder mehr Lichtquellen aufweisen, wobei jeder Lichtquelle zwei oder mehr der optischen Detektoren 7a, 7b, 7c, 7d zugeordnet sind.

In Fig. 4 weist der Spiegel 10 einen näherungsweise oder im Wesentlichen quaderförmigen Spiegelkörper auf. Die Seitenflächen des Spiegelkörpers müssen dabei jedoch nicht notwendigerweise Ebenen sein, sondern können beispielsweise auch gekrümmt sein. Der Spiegel 10 weist beispielsweise zwei gegenüberliegende spiegelnde Seiten 12a, 12b auf, die parallel zu der Rotationsachse 11 angeordnet sind. Senkrecht zu den spiegelnden Seiten 12a, 12b und ebenfalls parallel zur Rotationsachse 11 sind zwei nicht spiegelnde Stirnseiten 13a, 13b des Spiegelkörpers angeordnet.

In Fig. 4 ist der Laserscanner 2b beispielsweise während einer Scanphase dargestellt. Die Sendeeinheit 6 emittiert die Lasersignale 9, welche auf eine der spiegelnden Flächen 12a, 12b treffen und, wie auch in Fig. 2 schematisch dargestellt, durch die Umlenkeinheit auf das Fenster 5 gelenkt werden, so dass diese das Gehäuse 4 verlassen können. Die reflektierten Anteile 9' treffen ebenfalls auf die spiegelnde Fläche 12a, 12b und werden dementsprechend auf die Detektoreinheit 7 umgelenkt.

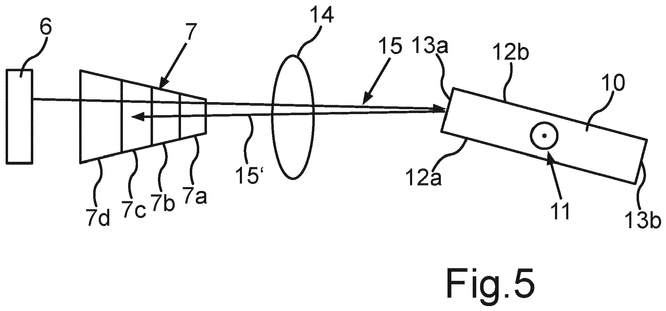

In Fig. 5 ist der Laserscanner 2b während einer Prüfphase dargestellt. Während der Prüfphase ist der Spiegel 10 bezüglich der Sendeeinheit 6 derart ausgerichtet, dass die während der Prüfphase emittierten Prüfsignale 15 auf eine der Stirnseiten 13a, 13b treffen und dementsprechend nicht in Richtung des Fensters 5 gelenkt werden, sondern stattdessen innerhalb des Gehäuses 4 mehrfach reflektiert beziehungsweise gestreut werden. Die entsprechend mehrfach reflektierten und gestreuten Anteile 15' des Prüfsignals 15 treffen wiederum auf die aktiven Oberflächen der optischen Detektoren 7a, 7b, 7c, 7d, die basierend darauf entsprechende Detektorsignale erzeugen und an die Recheneinheit übermitteln. Die Recheneinheit 2a bestimmt daraufhin für jedes der Detektorsignale eine entsprechende Pulsweite, die auch als Echopulsweite, EPW, bezeichnet werden kann.

Die Recheneinheit 2a berechnet außerdem eine Summe aller bestimmten Pulsweiten und vergleicht die Summe mit einem vorgegebenen, beispielweise im Rahmen einer Kalibrierung des Laserscanners 2b bestimmten, Referenzwert. Weicht die Summe um mehr als einen vorgegebenen Toleranzwert von dem Referenzwert ab, so kann darauf geschlossen werden, dass die Funktionsfähigkeit eines der optischen Detektoren 7a, 7b, 7c, 7d oder einer der Lichtquellen eingeschränkt ist, beispielsweise durch eine entsprechende Partikelkontamination. Die Recheneinheit 2a kann in diesem Fall beispielsweise eine Warn- oder Fehlermeldung ausgeben.

Wie insbesondere bezüglich der Figuren, beschrieben, ermöglicht es das verbesserte Konzept, mit höherer Zuverlässigkeit beziehungsweise Robustheit gegenüber Temperaturschwankungen Funktionseinschränkungen eines Laserscanners, insbesondere durch Kontamination von Lichtquellen oder optischen Detektoren des Laserscanners, zu bestimmen. Dazu wird die Invarianz der charakteristischen Summe von Pulsweiten ausgenutzt.

## Patentansprüche

1. Verfahren zur Funktionsüberprüfung eines Laserscanners (2b), der ein Gehäuse (4) mit einem lichtdurchlässigen Fenster (5), eine innerhalb des Gehäuses (4) angeordnete Sendeeinheit (6) zum Aussenden von Lasersignalen (9), eine bewegliche Umlenkeinheit (10) zur Umlenkung der Lasersignale (9) sowie eine innerhalb des Gehäuses (4) angeordnete Detektoreinheit (7), wobei gemäß dem Verfahren
- mittels der Sendeeinheit (6) während einer Prüfphase wenigstens ein Prüfsignal (15) gesendet wird;
- die Umlenkeinheit (10) während der Prüfphase bezüglich der Sendeeinheit (6) derart ausgerichtet wird, dass das wenigstens eine Prüfsignal (15) nicht auf das Fenster (5) gelenkt wird;
**dadurch gekennzeichnet, dass**
- Anteile (15') des wenigstens einen Prüfsignals (15) mittels wenigstens zwei optischen Detektoren (7a, 7b, 7c, 7d) der Detektoreinheit (7) erfasst werden und basierend auf den erfassten Anteilen (15') wenigstens zwei Detektorsignale erzeugt werden;
- mittels einer Recheneinheit (2a) für jedes der wenigstens zwei Detektorsignale eine Pulsweite bestimmt wird und eine Summe der bestimmten Pulsweiten berechnet wird; und
- eine Funktionsfähigkeit der Sendeeinheit (6) und/oder der Detektoreinheit (7) basierend auf der Summe überprüft wird.

2. Verfahren nach Anspruch 1,
**dadurch gekennzeichnet, dass**
- die Summe mittels der Recheneinheit (2a) mit einem vorgegebenen Referenzwert verglichen wird; und
- die Funktionsfähigkeit der Sendeeinheit (6) und/oder der Detektoreinheit (7) basierend auf einem Ergebnis des Vergleichs überprüft wird.

3. Verfahren nach einem der vorhergehenden Ansprüche,
**dadurch gekennzeichnet, dass**
- die wenigstens zwei optischen Detektoren (7a, 7b, 7c, 7d) jeweils eine Fotodiode beinhalten, die in Sperrrichtung betrieben werden;
- eine Sperrspannung zum Betrieb der Fotodioden während der Prüfphase geregelt wird, um eine vordefinierte Detektorempfindlichkeit der Detektoreinheit (7) einzustellen.

4. Verfahren nach Anspruch 3,
**dadurch gekennzeichnet, dass**
während der Prüfphase alle Fotodioden der wenigstens zwei optischen Detektoren (7a, 7b, 7c, 7d) jeweils mit derselben geregelten Sperrspannung betrieben werden.

5. Verfahren nach einem der Ansprüche 3 oder 4,
**dadurch gekennzeichnet, dass**
ein Sollwert für die Regelung der Sperrspannung basierend auf vorgegebenen Kalibrierungsdaten abhängig von der Detektorempfindlichkeit bestimmt wird.

6. Laserscannervorrichtung mit einer Recheneinheit (2a) und einem Laserscanner (2b), wobei
- der Laserscanner (2b) ein Gehäuse (4) mit einem lichtdurchlässigen Fenster (5), eine innerhalb des Gehäuses (4) angeordnete Sendeeinheit (6) zum Aussenden von Lasersignalen (9), eine Steuereinheit (8), eine bewegliche Umlenkeinheit (10) zur Umlenkung der Lasersignale (9) und eine innerhalb des Gehäuses (4) angeordnete Detektoreinheit (7) aufweist;
- die Steuereinheit (8) dazu eingerichtet ist, die Sendeeinheit (6) anzusteuern, so dass die Sendeeinheit (6) während einer Prüfphase wenigstens ein Prüfsignal (15) zu senden, und die Umlenkeinheit (10) anzusteuern, so dass die Umlenkeinheit (10) während der Prüfphase bezüglich der Sendeeinheit (6) derart ausgerichtet ist, dass das wenigstens eine Prüfsignal (15) nicht auf das Fenster (5) gelenkt wird; **dadurch gekennzeichnet, dass**
- die Detektoreinheit (7) wenigstens zwei optische Detektoren (7a, 7b, 7c, 7d) aufweist, die dazu eingerichtet sind, Anteile (15') des wenigstens einen Prüfsignals (15) zu erfassen und basierend auf den erfassten Anteilen (15') wenigstens zwei Detektorsignale zu erzeugen; und
- die Recheneinheit (2a) dazu eingerichtet ist,
- für jedes der wenigstens zwei Detektorsignale eine Pulsweite zu bestimmen und eine Summe der bestimmten Pulsweiten zu berechnen; und
- eine Funktionsfähigkeit der Sendeeinheit (6) und/oder der Detektoreinheit (7) basierend auf der Summe zu überprüfen.

7. Laserscannervorrichtung nach Anspruch 6,
**dadurch gekennzeichnet, dass**
die Umlenkeinheit (10) einen drehbaren oder schwenkbaren Spiegel oder ein mikroelektromechanisches Spiegelsystem beinhaltet.

8. Laserscannervorrichtung nach einem der Ansprüche 6 oder 7,
**dadurch gekennzeichnet, dass**
- die wenigstens zwei optischen Detektoren (7a, 7b, 7c, 7d) jeweils eine Fotodiode beinhalten;
- die Steuereinheit (8) dazu eingerichtet ist, die Fotodioden in Sperrrichtung zu betreiben und eine Sperrspannung zum Betrieb der Fotodioden während der Prüfphase zu regeln, um eine vordefinierte Detektorempfindlichkeit der Detektoreinheit (7) einzustellen.

9. Laserscannervorrichtung nach Anspruch 8,
**dadurch gekennzeichnet, dass**
die Steuereinheit (8) dazu eingerichtet ist, während der Prüfphase alle Fotodioden der wenigstens zwei optischen Detektoren (7a, 7b, 7c, 7d) jeweils mit derselben geregelten Sperrspannung zu betreiben.

10. Laserscannervorrichtung nach einem der Ansprüche 8 oder 9,
**dadurch gekennzeichnet, dass**
die Steuereinheit (8) dazu eingerichtet ist, einen ein Sollwert für die Regelung der Sperrspannung basierend auf vorgegebenen Kalibrierungsdaten abhängig von der Detektorempfindlichkeit zu bestimmen.

11. Kraftfahrzeug mit einer Laserscannervorrichtung (2) nach einem der Ansprüche 6 bis 10.

12. Computerprogrammprodukt mit Befehlen, die bewirken, dass eine Laserscannervorrichtung (2) nach einem der Ansprüche 6 bis 10 ein Verfahren nach einem der Ansprüche 1 bis 5 ausführt.

## Claims

1. Method for checking the function of a laser scanner (2b), which a housing (4) with a light-transmissive window (5), a transmitter unit (6) for emitting laser signals (9) which is arranged within the housing (4), a movable deflection unit (10) for deflecting the laser signals (9), and a detector unit (7) arranged within the housing (4), wherein according to the method
- at least one test signal (15) is transmitted by means of the transmitter unit (6) during a test phase;
- the deflection unit (10) is aligned vis-à-vis the transmitter unit (6) during the test phase so that the at least one test signal (15) is not directed at the window (5);
**characterized in that**
- components (15') of the at least one test signal (15) are recorded by means of at least two optical detectors (7a, 7b, 7c, 7d) of the detector unit (7) and at least two detector signals are generated on the basis of the detected components (15');
- a pulse width is determined by means of a computing unit (2a) for each of the at least two detector signals and a sum of the determined pulse widths is calculated; and
- a functionality of the transmitter unit (6) and/or detector unit (7) is checked on the basis of the sum.

2. Method according to Claim 1,
**characterized in that**
- the sum is compared with a given reference value by means of the computing unit (2a); and
- the functionality of the transmitter unit (6) and/or detector unit (7) is checked on the basis of a result of the comparison.

3. Method according to either of the preceding claims, **characterized in that**
- the at least two optical detectors (7a, 7b, 7c, 7d) each contain a photodiode operated in the reverse direction;
- a reverse voltage for operating the photodiodes is controlled during the test phase in order to set a predefined detector sensitivity of the detector unit (7) .

4. Method according to Claim 3,
**characterized in that**
all photodiodes of the at least two optical detectors (7a, 7b, 7c, 7d) are respectively operated with the same controlled reverse voltage during the test phase.

5. Method according to either of Claims 3 and 4,
**characterized in that**
a setpoint value for the closed-loop control of the reverse voltage is determined dependent on the detector sensitivity on the basis of given calibration data.

6. Laser scanner device having a computing unit (2a) and a laser scanner (2b), wherein
- the laser scanner (2b) has a housing (4) with a light-transmissive window (5), a transmitter unit (6) for emitting laser signals (9) which is arranged within the housing (4), a control unit (8), a movable deflection unit (10) for deflecting the laser signals (9), and a detector unit (7) arranged within the housing (4);
- the control unit (8) is configured to drive the transmitter unit (6) such that the transmitter unit (6) transmits at least one test signal (15) during a test phase, and to drive the deflection unit (10) in such a way that the deflection unit (10) is aligned vis-à-vis the transmitter unit (6) during the test phase so that the at least one test signal (15) is not directed at the window (5);
**characterized in that**
- the detector unit (7) has at least two optical detectors (7a, 7b, 7c, 7d) which are configured to record components (15') of the at least one test signal (15) and to generate at least two detector signals on the basis of the detected components (15'); and
- the computing unit (2a) is configured
- to determine a pulse width for each of the at least two detector signals and to calculate a sum of the determined pulse widths; and
- to check a functionality of the transmitter unit (6) and/or detector unit (7) on the basis of the sum.

7. Laser scanner device according to Claim 6,
**characterized in that**
the deflection unit (10) contains a rotatable or pivotable mirror or a microelectromechanical mirror system.

8. Laser scanner device according to either of Claims 6 and 7,
**characterized in that**
- the at least two optical detectors (7a, 7b, 7c, 7d) each contain a photodiode;
- the control unit (8) is configured to operate the photodiodes in the reverse direction and to control a reverse voltage for operating the photodiodes during the test phase in order to set a predefined detector sensitivity of the detector unit (7).

9. Laser scanner device according to Claim 8,
**characterized in that**
the control unit (8) is configured to operate all photodiodes of the at least two optical detectors (7a, 7b, 7c, 7d) using the same controlled reverse voltage in each case during the test phase.

10. Laser scanner device according to either of Claims 8 and 9,
**characterized in that**
the control unit (8) is configured to determine a setpoint value for the closed-loop control of the reverse voltage dependent on the detector sensitivity on the basis of given calibration data.

11. Motor vehicle having a laser scanner device (2) according to any one of Claims 6 to 10.

12. Computer program product having instructions which cause a laser scanner device (2) according to any one of Claims 6 to 10 to carry out a method according to any one of Claims 1 to 5.

## Revendications

1. Procédé de contrôle du fonctionnement d'un scanner laser (2b), qui comprend un boîtier (4) pourvu d'une fenêtre (5) laissant passer la lumière, une unité d'émission (6) disposée à l'intérieur du boîtier (4) et destinée à émettre des signaux laser (9), une unité de déviation mobile (10) destinée à dévier les signaux laser (9) et une unité de détection (7) disposée à l'intérieur du boîtier (4), selon le procédé
- au moins un signal de test (15) étant envoyé au moyen de l'unité d'émission (6) pendant une phase de test ;
- l'unité de déviation (10) étant orientée par rapport à l'unité d'émission (6) pendant la phase de test de telle sorte que l'au moins un signal de test (15) ne soit pas dévié vers la fenêtre (5) ; **caractérisé en ce que**
- des composantes (15') de l'au moins un signal de test (15) sont détectées au moyen d'au moins deux détecteurs optiques (7a, 7b, 7c, 7d) de l'unité de détection (7) et au moins deux signaux de détection sont générés sur la base des composantes détectées (15') ;
- une largeur d'impulsion est déterminée pour chacun des au moins deux signaux de détection au moyen d'une unité de calcul (2a) et une somme des largeurs d'impulsion déterminées est calculée ; et
- une fonctionnalité de l'unité d'émission (6) et/ou de l'unité de détection (7) est contrôlée sur la base de la somme.

2. Procédé selon la revendication 1,
**caractérisé en ce que**
- la somme est comparée à une valeur de référence spécifiée au moyen de l'unité de calcul (2a) ; et
- la fonctionnalité de l'unité d'émission (6) et/ou de l'unité de détection (7) est contrôlée sur la base d'un résultat de la comparaison.

3. Procédé selon l'une des revendications précédentes,
**caractérisé en ce que**
- les au moins deux détecteurs optiques (7a, 7b, 7c, 7d) contiennent chacun une photodiode qui fonctionnent dans le sens bloquant ;
- une tension de blocage du fonctionnement des photodiodes est régulée pendant la phase de test afin de régler une sensibilité de détection prédéfinie de l'unité de détection (7).

4. Procédé selon la revendication 3,
**caractérisé en ce que**
pendant la phase de test, toutes les photodiodes des au moins deux détecteurs optiques (7a, 7b, 7c, 7d) fonctionnent chacune avec la même tension de blocage régulée.

5. Procédé selon l'une des revendications 3 ou 4, **caractérisé en ce que**
une valeur de consigne destinée à réguler la tension de blocage est déterminée sur la base de données d'étalonnage spécifiées en fonction de la sensibilité du détecteur.

6. Dispositif à scanner à laser comportant une unité de calcul (2a) et un scanner à laser (2b),
- le scanner à laser (2b) comportant un boîtier (4) pourvu d'une fenêtre (5) laissant passer la lumière, une unité d'émission (6) disposée à l'intérieur du boîtier (4) et destinée à émettre des signaux laser (9), une unité de commande (8), une unité de déviation mobile (10) destinée à dévier les signaux laser (9) et une unité de détection (7) disposée à l'intérieur du boîtier (4) ;
- l'unité de commande (8) étant conçue pour commander l'unité d'émission (6) de sorte que l'unité d'émission (6) émette au moins un signal de test (15) pendant une phase de test, et pour commander l'unité de déviation (10) de sorte que l'unité de déviation (10) soit orientée pendant la phase de test par rapport à l'unité d'émission (6) de manière à ce que l'au moins un signal de test (15) ne soit pas dévié vers la fenêtre (5) ;
**caractérisé en ce que**
- l'unité de détection (7) comprend au moins deux détecteurs optiques (7a, 7b, 7c, 7d) qui sont conçus pour détecter des composantes (15') de l'au moins un signal de test (15) et pour générer au moins deux signaux de détection sur la base des composantes détectées (15') ; et
- l'unité de calcul (2a) est conçue pour
- déterminer une largeur d'impulsion pour chacun des au moins deux signaux de détection et calculer une somme des largeurs d'impulsion déterminées ; et
- contrôler la fonctionnalité de l'unité d'émission (6) et/ou de l'unité de détection (7) sur la base de la somme.

7. Dispositif à scanner à laser selon la revendication 6,
**caractérisé en ce que**
l'unité de déviation (10) contient un miroir rotatif ou pivotant ou un système de miroirs micro-électromécanique.

8. Dispositif à scanner à laser selon l'une des revendications 6 ou 7,
**caractérisé en ce que**
- les au moins deux détecteurs optiques (7a, 7b, 7c, 7d) contiennent chacun une photodiode ;
- l'unité de commande (8) est conçue pour faire fonctionner les photodiodes dans le sens bloquant et pour réguler une tension de blocage pour faire fonctionner les photodiodes pendant la phase de test afin de régler une sensibilité de détecteur prédéfinie de l'unité de détection (7).

9. Dispositif à scanner à laser selon la revendication 8,
**caractérisé en ce que**
- l'unité de commande (8) est conçue pour faire fonctionner toutes les photodiodes des au moins deux détecteurs optiques (7a, 7b, 7c, 7d) avec la même tension de blocage régulée pendant la phase de test.

10. Dispositif à scanner à laser selon l'une des revendications 8 ou 9,
**caractérisé en ce que**
l'unité de commande (8) est conçue pour déterminer une valeur de consigne destinée à réguler la tension de blocage sur la base de données d'étalonnage spécifiées en fonction de la sensibilité du détecteur.

11. Véhicule automobile comprenant un dispositif à scanner à laser (2) selon l'une des revendications 6 à 10.

12. Produit programme informatique comprenant des instructions qui amènent un dispositif à scanner à laser (2) selon l'une des revendications 6 à 10 à mettre en œuvre un procédé selon l'une des revendications 1 à 5.
